# FASCICULE DE BREVET EUROPEEN

(11) **EP 3 462 005 B1**
(45) Date de publication et mention de la délivrance du brevet: **01.07.2020**
(21) Numéro de dépôt: 18194993.4
(22) Date de dépôt: 18.09.2018
(51) Int. Cl.: F02B 23/08, F02B 23/10, F02D 13/02

(54) **CHAMBRE DE COMBUSTION DE FORME ELLIPTIQUE**
ELLIPSENFÖRMIGE VERBRENNUNGSKAMMER
ELLIPTICAL COMBUSTION CHAMBER

(30) Priorité: 29.09.2017 FR 1759055
(43) Date de publication de la demande: 03.04.2019
(73) Titulaire: IFP Energies nouvelles, 92852 Rueil-Malmaison Cedex (FR)
(72) Inventeur: AMBRAZAS, Didier, 94260 FRESNES (FR); GAUTROT, Xavier, 92500 RUEIL-MALMAISON (FR); LAGET, Olivier, 92500 RUEIL-MALMAISON (FR); TROST, Julien, 75004 PARIS (FR)
(74) Mandataire: IFP Energies nouvelles

(56) Documents cités:
- EP-A1- 0 945 604
- DE-A1- 3 019 330
- US-A1- 2005 241 612
- US-B1- 6 267 107

## Description

La présente invention concerne le domaine des moteurs à combustion interne. L'invention concerne en particulier une chambre de combustion d'un tel moteur.

Ce type de moteur comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible (carburant) dans la chambre de combustion.

Lors de la conception d'un moteur, les contraintes de performances, d'émissions de polluants et de tenue mécanique de la chambre de combustion sont de plus en plus fortes, alors que les moyens de satisfaire ces contraintes peuvent être incompatibles.

Ainsi, l'augmentation des performances entraîne généralement une augmentation des émissions de polluants et des contraintes mécaniques plus fortes.

Pour pallier ces contraintes et de manière à garantir une faible émission de polluants et une tenue mécanique satisfaisante sur toute la plage de fonctionnement du moteur, l'utilisation de la totalité du carburant présent dans la chambre de combustion, par un comburant comprenant par exemple de l'air à pression ambiante, de l'air suralimenté, ou un mélange d'air (suralimenté ou non) et de gaz brûlés recirculés, est d'une grande importance. En effet, il est nécessaire que le mélange carburé (comburant/combustible) dans la chambre de combustion soit le plus homogène possible.

De plus, afin d'assurer un bon rendement ainsi qu'une bonne vitesse de combustion il est souhaitable d'avoir un haut niveau de turbulence, et plus spécifiquement un haut niveau d'énergie cinétique turbulente, à l'instant de l'allumage du mélange carburé.

Dans ce but, il existe différentes techniques pour mettre en œuvre ces turbulences, connues par leur dénomination anglophones : swirl (tourbillon longitudinal), tumble (tourbillon transversal), swumble (composé de swirl et tumble) et squish (jaillissement).

Le swirl, qui est un mouvement macroscopique de rotation du mélange carburé autour d'un axe colinéaire à l'axe du cylindre, se caractérise par une bonne conservation du mouvement au cours du processus d'admission, et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion acceptable. Par ailleurs, ce mouvement est assez sensible à la géométrie de la chambre de combustion ainsi qu'à la loi de levée, aussi bien en termes d'étalement que hauteur de levée maximale.

Le swumble est un mouvement composé de swirl et de tumble. L'utilisation du swumble permet de bénéficier des avantages des deux structures aérodynamiques détaillées ci-dessus et donc de bénéficier d'une excellente homogénéisation et d'une meilleure vitesse de combustion grâce à un niveau de turbulence plus élevée lors de la phase d'admission que ce qu'on observe avec les meilleurs moteurs à allumage commandé actuels.

Le squish est un mouvement aérodynamique brusque qui apparait lorsque l'air est rapidement « chassé » d'un volume mort.

Différentes conceptions de chambre de combustion ont été réalisées pour mettre en œuvre ces phénomènes.

Par exemple, le brevet US 2005/0241612 décrit une chambre de combustion avec un fort squish à injection directe, dont l'allumage se fait par au moins une bougie. Cependant la disposition des soupapes, de l'injecteur et des bougies n'est pas optimisée pour favoriser le swumble, dans le but d'améliorer les performances du moteur (rendement et vitesse de combustion).

Selon un autre exemple, le brevet PH 2010000186 décrit une chambre de combustion générant du squish au travers d'une forme spécifique proche de l'ellipse. Toutefois, pour cette chambre de combustion l'injection de carburant n'est pas directe, ce qui ne favorise pas le swumble et les performances du moteur (rendement et vitesse de combustion).

D'autres exemples de chambres de combustion sont par ailleurs connus des brevets US 6267107 B1, EP 0945604 A1 et DE 3019330 A1.

Pour pallier ces inconvénients, la présente invention concerne une chambre de combustion d'un moteur à combustion. La chambre de combustion comporte une unique soupape d'admission, une unique soupape d'échappement, un injecteur de carburant, et deux bougies. Selon l'invention, la chambre de combustion est sensiblement elliptique, et la disposition des composants de la chambre de combustion est la suivante :
- les soupapes sont situées aux extrémités du grand axe de l'ellipse,
- les bougies sont situées à proximité du petit axe de l'ellipse,
- l'injecteur de carburant est situé sur la périphérie de l'ellipse entre la soupape d'admission et une bougie.

Cette conception elliptique de la chambre de combustion associée à cette disposition des composants permettent de générer une structure aérodynamique de swumble, de favoriser l'homogénéisation du mélange carburé. De plus, elle permet une vitesse de combustion élevée tout en prévenant les phénomènes d'auto-inflammation.

### Le dispositif selon l'invention

L'invention concerne une chambre de combustion d'un moteur à combustion interne comprenant au moins un cylindre dans lequel se déplace un piston, ladite chambre de combustion comprenant une unique soupape d'amission, une unique soupape d'échappement, un unique injecteur de carburant et deux bougies. Ladite chambre de combustion a sensiblement une forme d'ellipse, ladite soupape d'admission et ladite soupape d'échappement sont agencées aux extrémités du grand axe de ladite ellipse, en ce que lesdites bougies sont situées à proximité du petit axe de ladite ellipse, et ledit injecteur de carburant est situé à l'intérieur de l'ellipse à proximité de la périphérie de l'ellipse entre ladite soupape d'admission et une bougie.

De plus, selon l'invention, ladite ellipse comporte un décrochement dirigé vers ladite soupape d'admission, et agencé sensiblement de manière symétrique avec ledit injecteur de carburant par rapport au demi grand axe.

Avantageusement, ledit décrochement est sensiblement rectiligne.

Conformément à une mise en œuvre, ladite soupape d'admission est tangente à ladite ellipse.

Selon un aspect de l'invention, ladite soupape d'échappement est tangente à ladite ellipse.

Selon une caractéristique, le ratio du diamètre de ladite soupape d'admission par rapport au diamètre de ladite soupape d'échappement est compris entre 1 et 3, de préférence entre 1.5 et 2, et plus préférentiellement entre 1.65 et 1.75.

De manière avantageuse, la longueur du demi grand axe de ladite ellipse est sensiblement égale au rayon dudit cylindre dudit moteur à combustion.

De préférence, la longueur du demi petit axe de ladite ellipse est comprise entre 70 et 90 %, de préférence entre 75 et 85 %, du rayon dudit cylindre dudit moteur à combustion.

De plus, l'invention concerne un moteur à combustion interne comprenant au moins un cylindre dans lequel se déplace un piston et une chambre de combustion selon l'une des caractéristiques précédentes.

Selon un mode de réalisation de l'invention, ledit moteur à combustion comprend un conduit d'admission de gaz configuré pour initier un mouvement de rotation de l'air selon l'axe du cylindre et un mouvement de rotation selon un axe perpendiculaire à l'axe dudit cylindre.

En outre, l'invention concerne une utilisation d'un moteur à combustion selon l'une des caractéristiques précédentes pour un cycle de Miller.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 illustre une chambre de combustion selon un mode de réalisation de l'invention.
La figure 2 illustre l'évolution du taux de tumble en fonction de la levée de la soupape d'admission pour une chambre de combustion selon l'invention.
La figure 3 illustre l'évolution du taux de swirl en fonction de la levée de la soupape d'admission pour une chambre de combustion selon l'invention.
La figure 4 illustre la structure du swumble formé au sein d'un cylindre au moyen de la chambre de combustion selon l'invention.

### Description détaillée de l'invention

La présente invention concerne une chambre de combustion pour un moteur à combustion interne. Le moteur à combustion interne comprend au moins un cylindre dans lequel se déplace un piston.

Selon l'invention, la chambre de combustion comprend :
- une unique soupape d'admission, permettant l'arrivée du mélange gazeux dans la chambre de combustion, avant la phase de combustion
- une unique soupape d'échappement, permettant la sortie des gaz brulés après la phase de combustion,
- un unique injecteur de carburant, permettant d'injecter directement le carburant dans la chambre de combustion, et
- deux bougies, permettant l'allumage du mélange gaz et carburant dans la chambre de combustion.

Le mélange gazeux peut comprendre de l'air suralimenté ou non, ou un mélange d'air, suralimenté ou non, avec des gaz brulés recirculés.

Le carburant peut être notamment de l'essence, ou du gazole.

L'utilisation de seulement deux soupapes (une pour l'admission et l'autre pour l'échappement) présentent plusieurs avantages de conception, en effet un tel moteur est moins onéreux (avec un nombre de pièces limité), plus léger et plus compact. De plus, cette conception permet plus d'espace disponible pour les bougies et injecteur.

L'utilisation d'une seule soupape d'admission facilite la création de swumble. En effet, il est plus difficile de créer du swumble avec deux conduits d'admission débitants.

Selon l'invention, la chambre de combustion a sensiblement une forme d'ellipse. Cette forme favorise un squish important. En effet, le ratio entre la surface de cette ellipse et la surface d'une section du cylindre est particulièrement faible, ce qui correspond à un squish important.

Afin de favoriser le swumble et le squish, les composants de la chambre de combustion sont disposés de manière spécifique :
- la soupape d'admission et la soupape d'échappement sont agencées aux extrémités du grand axe de l'ellipse, ainsi, les soupapes sont opposées l'une et l'autre, et sont éloignées,
- les bougies sont agencées à proximité du petit axe de l'ellipse, ainsi les bougies sont situées entre la soupape d'admission et la soupape d'échappement, et
- l'injecteur de carburant est situé à la périphérie de l'ellipse entre la soupape d'admission et une bougie, cet emplacement favorise le mélange des gaz et du carburant grâce au mouvement de swumble.

Cette conception elliptique de la chambre de combustion associée à cette disposition des composants permettent de générer une structure aérodynamique de swumble, de favoriser l'homogénéisation du mélange carburé. De plus, elle permet une vitesse de combustion élevée tout en prévenant les phénomènes d'auto-inflammation. En effet, on rappelle que le swumble permet de bénéficier d'une excellente homogénéisation et d'une meilleure vitesse de combustion grâce à un niveau de turbulence plus élevée lors de la phase d'admission que ce qu'on observe avec les meilleurs moteurs à allumage commandé actuels.

Selon l'invention, l'ellipse comporte un décrochement dirigé vers la soupape d'admission. Le décrochement est agencé sensiblement symétriquement à l'injecteur de carburant par rapport au grand axe. En d'autres termes, le décrochement est situé sur le côté de la soupape d'admission opposé au côté sur lequel est agencé l'injecteur de carburant. Le décrochement est donc situé entre une bougie et la soupape d'admission. On appelle décrochement, une modification de la forme extérieure de l'ellipse, cette modification étant réalisée vers l'intérieur de l'ellipse. Le décrochement permet de renforcer des turbulences de type swirl. En effet, le décrochement a pour but de favoriser la formation de la partie swirl du mouvement de swumble. Ce décrochement crée un prolongement du conduit dans la chambre qui permet de donner une continuité dans la formation de la structure aérodynamique.

Avantageusement, le décrochement peut avoir une forme sensiblement rectiligne. Par exemple le décrochement rectiligne peut être réalisé avec des rayons de congés compris entre 2 et 10 mm, de préférence entre 4 et 6 mm.

Conformément à une mise en œuvre de l'invention, la soupape d'admission peut être tangente à l'ellipse. Ainsi, le remplissage de la chambre de combustion est optimisé.

Selon une caractéristique de l'invention, la soupape d'échappement peut être tangente à l'ellipse. De cette manière, la vidange de la chambre de combustion est optimisé.

Conformément à un mode de réalisation de l'invention, le ratio de diamètre de la soupape admission sur la soupape échappement peut être compris entre 1 et 3, de préférence entre 1.5 et 2, et plus préférentiellement entre 1.65 et 1.75. Un tel ratio offre le meilleur compromis entre performances du moteur (liées à la quantité d'air admise) et capacité du vidange du moteur suffisante.

Selon un mode de réalisation de l'invention, la longueur du demi grand axe de l'ellipse peut être sensiblement égale au rayon du cylindre du moteur à combustion. Ainsi, la plus grande dimension de l'ellipse correspond sensiblement au diamètre du cylindre, ce qui permet d'optimiser le volume pour la chambre de combustion.

Conformément à une mise en œuvre de l'invention, la longueur du demi petit axe de l'ellipse peut être comprise entre 70 et 90 %, et de préférence entre 75 et 85 %, du rayon du cylindre du moteur à combustion.

Selon une configuration de l'invention, les bougies ne sont pas disposées sur la périphérie de l'ellipse. Ce placement des bougies permet une propagation optimale du front de flamme afin d'éviter cliquetis et gaz imbrulés.

En outre, la chambre de combustion peut être conçue pour résister à des taux de compression compris entre 6:1 et 22:1, de préférence entre 10:1 et 20:1, et plus préférentiellement entre 14:1 et 18:1.

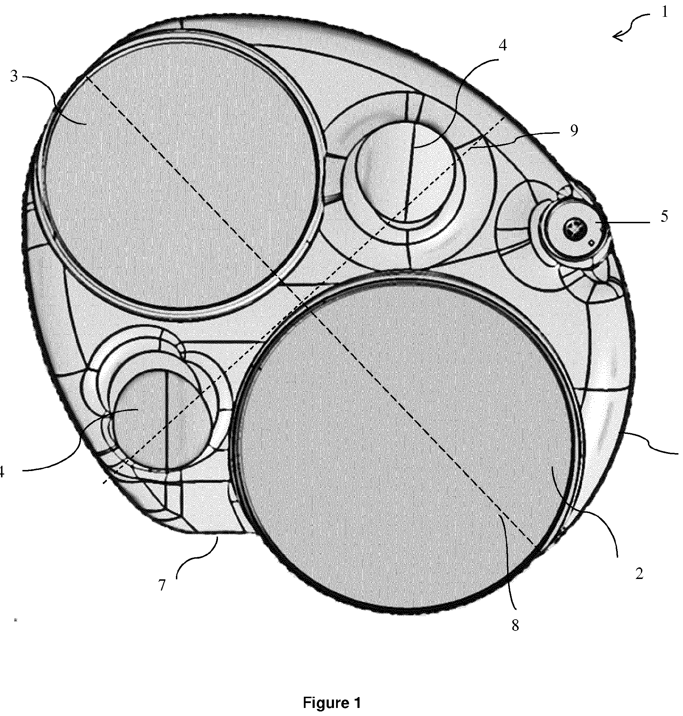

La figure 1 illustre, schématiquement et de manière non limitative une chambre de combustion 1 selon un mode de réalisation de l'invention. La chambre de combustion 1 a sensiblement une forme d'ellipse 6. L'ellipse 6 est définie par son grand axe 8 et son petit axe 9. La chambre de combustion 1 comporte une unique soupape d'admission 2, située à une extrémité d'un demi grand axe 8. La soupape d'admission 2 est tangente à l'ellipse 6. La chambre de combustion 1 comporte une unique soupape d'échappement 3, située à une extrémité d'un demi grand axe 8. Cette extrémité est opposée à l'extrémité à laquelle se situe la soupape d'admission 2. La soupape d'échappement 3 est tangente à l'ellipse 6. La chambre de combustion 1 comporte en outre deux bougies 4. Les bougies 4 sont disposées sensiblement sur le petit axe 9 (à proximité du petit axe 9). En outre, la chambre de combustion 1 comprend un unique injecteur de carburant 5. L'injecteur de carburant 5 est situé en périphérie de l'ellipse 6. De plus, l'injecteur de carburant 5 est situé entre la soupape d'admission 2 et une bougie 4. Du côté opposé à l'injecteur 5, l'ellipse 6 comporte un décrochement rectiligne 7. Le décrochement rectiligne 7 est disposé entre une bougie 4 et la soupape d'admission 2. Le décrochement rectiligne 7 est dirigé vers la soupape d'admission 2.

En plus de favoriser le squish, la forme d'ellipse 6 telle qu'elle est présentée favorise le développement du mouvement de swirl qui prend naissance dans le conduit d'admission. Cette chambre en est en quelque sorte, le prolongement.

La présente invention concerne également un moteur à combustion interne comprenant :
- au moins un cylindre dans lequel se déplace un piston,
- une chambre de combustion associée au cylindre, la chambre de combustion étant réalisée selon l'une quelconque des variantes, ou selon une quelconque des combinaisons des variantes décrites précédemment.

Selon un aspect de l'invention, le moteur à combustion interne comporte entre un et huit cylindres. Par exemple, le moteur à combustion peut comprendre deux, trois ou quatre cylindres.

Selon une caractéristique de l'invention, le moteur à combustion peut comprendre un circuit de recirculation des gaz brulés (EGR).

Selon un mode de réalisation de l'invention, le moteur à combustion peut comprendre un conduit d'admission d'air, relié à la chambre de combustion, et dans lequel est placée la soupape d'admission, configuré pour initier un mouvement de swumble, c'est-à-dire un mouvement de rotation de l'air selon l'axe du cylindre (tumble) et un mouvement de rotation selon un axe perpendiculaire à l'axe du cylindre (swirl).

L'invention porte sur une chambre de combustion conçue spécifiquement pour obtenir une vitesse de combustion supérieure à ce qu'on observe avec les moteurs à allumage commandé actuels et ainsi assurer un meilleur rendement de combustion.

En particulier, ladite chambre de combustion selon l'invention est particulièrement adaptée pour une utilisation en cycle dit de « Miller » sur une plage étendue de fonctionnement. Ce cycle se caractérise par une fermeture de la ou des soupapes admission avant le point mort bas du piston. Cela permet d'avoir un travail récupéré plus important en plus d'un refroidissement de la charge admise.

Un tel moteur à combustion peut être utilisé dans le domaine des transports, par exemple routier ou aéronautique, ou dans le domaine des installations stationnaires, tel qu'un groupe électrogène.

### Exemple d'application

Les caractéristiques et avantages de la chambre de combustion selon l'invention apparaîtront plus clairement à la lecture de l'exemple d'application ci-après.

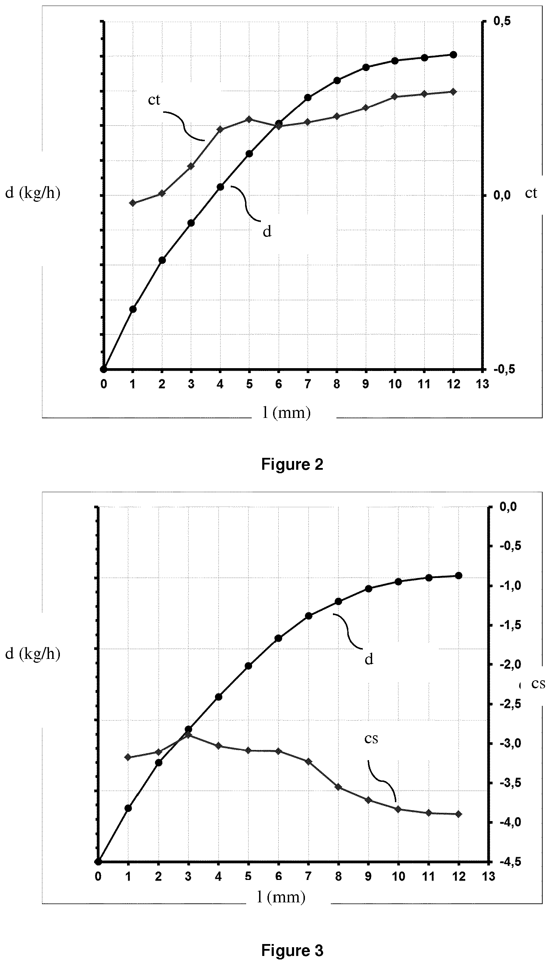

La présente invention a été évaluée et comparée aux moteurs à allumage commandé actuels. Les figures 2 et 3 montrent respectivement l'évolution du taux de tumble et du coefficient de swirl pour une chambre de combustion selon l'invention.

La figure 2 illustre l'évolution du coefficient de tumble ct, en fonction de la levée I en mm de la soupape d'admission. Sur la figure 2 est aussi représenté le débit d en kg/h du gaz au travers de la soupape d'admission. On observe que le coefficient de tumble croit et reste important lors de la levée de la soupape d'admission.

La figure 3 illustre l'évolution du coefficient de swirl cs, en fonction de la levée I en mm de la soupape d'admission. Sur la figure 3 est aussi représenté le débit d en kg/h du gaz au travers de la soupape d'admission. On observe que le coefficient de swirl reste important (en valeur absolue) lors de la levée de la soupape d'admission. Par conséquent, la chambre de combustion selon l'invention permet un mouvement de swumble.

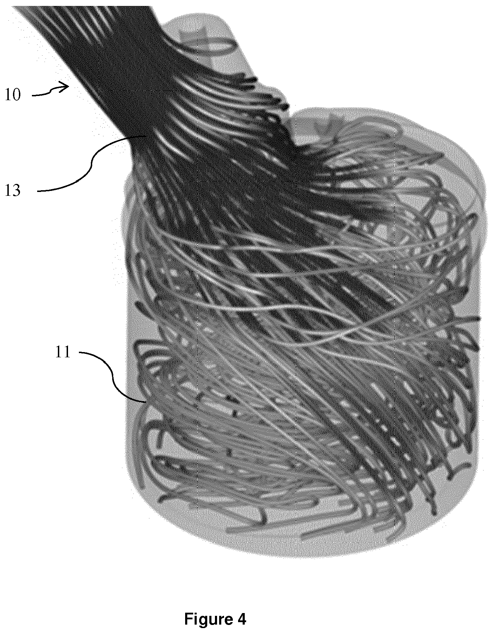

La figure 4 présente schématiquement et de manière non limitative une visualisation graphique du la structure aérodynamique de swumble au sein de la conduite d'admission 10 et du cylindre 11, pour un moteur équipé d'une chambre de combustion selon l'invention. La figure 4 illustre différents flux de gaz 13 dans ces éléments.

On constate également que la durée de combustion est indépendante de l'étalement et du calage de la loi de distribution, ce qu'on ne retrouve pas sur les moteurs à allumage commandé actuels. Cela permet d'impacter positivement le rendement global du moteur à combustion interne.

Ainsi, la chambre de combustion selon l'invention permet un fort swumble dans le cylindre ce qui optimise l'efficacité de la combustion, et donc du moteur à combustion.

## Revendications

1. Chambre de combustion d'un moteur à combustion interne comprenant au moins un cylindre dans lequel se déplace un piston, ladite chambre de combustion (1) comprenant une unique soupape d'amission (2), une unique soupape d'échappement (3), un unique injecteur de carburant (5) et deux bougies (4), ladite chambre de combustion (1) ayant sensiblement une forme d'ellipse (6), ladite soupape d'admission (2) et ladite soupape d'échappement (3) étant agencées aux extrémités du grand axe (8) de ladite ellipse (6), lesdites bougies (4) étant situées à proximité du petit axe (9) de ladite ellipse (6),
**caractérisée en ce que** ledit injecteur de carburant (5) est situé à l'intérieur de l'ellipse (6) à proximité de la périphérie de l'ellipse (6) entre ladite soupape d'admission (2) et une bougie (4), et **en ce que** ladite ellipse (6) comporte un décrochement (7) dirigé vers ladite soupape d'admission (2), et agencé sensiblement de manière symétrique avec ledit injecteur de carburant (5) par rapport au demi grand axe (8).

2. Chambre de combustion selon la revendication 1, dans laquelle ledit décrochement (7) est sensiblement rectiligne.

3. Chambre de combustion selon l'une des revendications précédentes, dans laquelle ladite soupape d'admission (2) est tangente à ladite ellipse (6).

4. Chambre de combustion selon l'une des revendications précédentes, dans laquelle ladite soupape d'échappement (3) est tangente à ladite ellipse (6).

5. Chambre de combustion selon l'une des revendications précédentes, dans laquelle le ratio du diamètre de ladite soupape d'admission (2) par rapport au diamètre de ladite soupape d'échappement (3) est compris entre 1 et 3, de préférence entre 1.5 et 2, et plus préférentiellement entre 1.65 et 1.75.

6. Chambre de combustion selon l'une des revendications précédentes, dans laquelle la longueur du demi grand axe (8) de ladite ellipse (6) est sensiblement égale au rayon dudit cylindre (11) dudit moteur à combustion.

7. Chambre de combustion selon l'une des revendications précédentes, dans laquelle la longueur du demi petit axe (9) de ladite ellipse (6) est comprise entre 70 et 90 %, de préférence entre 75 et 85 %, du rayon dudit cylindre (11) dudit moteur à combustion.

8. Moteur à combustion interne comprenant au moins un cylindre (11) dans lequel se déplace un piston et une chambre de combustion (1) selon l'une des revendications précédentes.

9. Moteur à combustion selon la revendication 8, dans lequel ledit moteur à combustion comprend un conduit d'admission (10) de gaz configuré pour initier un mouvement de rotation de l'air selon l'axe du cylindre (11) et un mouvement de rotation selon un axe perpendiculaire à l'axe dudit cylindre (11).

10. Utilisation d'un moteur à combustion selon l'une des revendications 8 ou 9 pour un cycle de Miller.

## Patentansprüche

1. Brennkammer eines Verbrennungsmotors, der mindestens einen Zylinder enthält, in dem sich ein Kolben verschiebt, wobei die Brennkammer (1) ein einziges Einlassventil (2), ein einziges Auslassventil (3), eine einzige Kraftstoffdüse (5) und zwei Kerzen (4) enthält, wobei die Brennkammer (1) im Wesentlichen die Form einer Ellipse (6) hat, wobei das Einlassventil (2) und das Auslassventil (3) an den Enden der großen Achse (8) der Ellipse (6) angeordnet sind, wobei die Kerzen (4) sich in der Nähe der kleinen Achse (9) der Ellipse (6) befinden, **dadurch gekennzeichnet, dass** die Kraftstoffdüse (5) sich im Inneren der Ellipse (6) in der Nähe des Umfangs der Ellipse (6) zwischen dem Einlassventil (2) und einer Kerze (4) befindet, und dass die Ellipse (6) einen Absatz (7) aufweist, der zum Einlassventil (2) gerichtet und im Wesentlichen bezüglich der großen Halbachse (8) symmetrisch mit der Kraftstoffdüse (5) angeordnet ist.

2. Brennkammer nach Anspruch 1, wobei der Absatz (7) im Wesentlichen geradlinig ist.

3. Brennkammer nach einem der vorhergehenden Ansprüche, wobei das Einlassventil (2) die Ellipse (6) tangiert.

4. Brennkammer nach einem der vorhergehenden Ansprüche, wobei das Auslassventil (3) die Ellipse (6) tangiert.

5. Brennkammer nach einem der vorhergehenden Ansprüche, wobei das Verhältnis des Durchmessers des Einlassventils (2) bezüglich des Durchmessers des Auslassventils (3) zwischen 1 und 3, vorzugsweise zwischen 1,5 und 2, und bevorzugter zwischen 1,65 und 1,75 liegt.

6. Brennkammer nach einem der vorhergehenden Ansprüche, wobei die Länge der großen Halbachse (8) der Ellipse (6) im Wesentlichen gleich dem Radius des Zylinders (11) des Verbrennungsmotors ist.

7. Brennkammer nach einem der vorhergehenden Ansprüche, wobei die Länge der kleinen Halbachse (9) der Ellipse (6) zwischen 70 und 90%, vorzugsweise zwischen 75 und 85%, des Radius des Zylinders (11) des Verbrennungsmotors liegt.

8. Verbrennungsmotor, der mindestens einen Zylinder (11), in dem sich ein Kolben verschiebt, und eine Brennkammer (1) nach einem der vorhergehenden Ansprüche enthält.

9. Verbrennungsmotor nach Anspruch 8, wobei der Verbrennungsmotor einen Gaseinlasskanal (10) enthält, der konfiguriert ist, eine Drehbewegung der Luft gemäß der Achse des Zylinders (11) und eine Drehbewegung gemäß einer Achse lotrecht zur Achse des Zylinders (11) zu starten.

10. Verwendung eines Verbrennungsmotors nach einem der Ansprüche 8 oder 9 für einen Miller-Zyklus.

## Claims

1. Combustion chamber of an internal combustion engine comprising at least one cylinder in which a piston moves, said combustion chamber (1) comprising a single intake valve (2), a single exhaust valve (3), a single fuel injector (5) and two spark plugs (4), said combustion chamber (1) having substantially the shape of an ellipse (6), said intake valve (2) and said exhaust valve (3) being arranged at the ends of the major axis (8) of said ellipse (6), said spark plugs (4) being situated in the vicinity of the minor axis (9) of said ellipse (6), **characterized in that** said fuel injector (5) is situated inside the ellipse (6) in the vicinity of the periphery of the ellipse (6) between said intake valve (2) and a spark plug (4), and **in that** said ellipse (6) comprises an offset (7) directed towards said intake valve (2) and arranged substantially symmetrically with said fuel injector (5) with respect to the semi-major axis (8).

2. Combustion chamber according to Claim 1, in which said offset (7) is substantially rectilinear.

3. Combustion chamber according to either of the preceding claims, in which said intake valve (2) is tangent to said ellipse (6).

4. Combustion chamber according to one of the preceding claims, in which said exhaust valve (3) is tangent to said ellipse (6).

5. Combustion chamber according to one of the preceding claims, in which the ratio of the diameter of said intake valve (2) with respect to the diameter of said exhaust valve (3) is between 1 and 3, preferably between 1.5 and 2, and more preferably between 1.65 and 1.75.

6. Combustion chamber according to one of the preceding claims, in which the length of the semi-major axis (8) of said ellipse (6) is substantially equal to the radius of said cylinder (11) of said combustion engine.

7. Combustion chamber according to one of the preceding claims, in which the length of the semi-minor axis (9) of said ellipse (6) is between 70% and 90%, preferably between 75% and 85%, of the radius of said cylinder (11) of said combustion engine.

8. Internal combustion engine comprising at least one cylinder (11), in which a piston moves, and a combustion chamber (1) according to one of the preceding claims.

9. Combustion engine according to Claim 8, in which said combustion engine comprises a gas intake duct (10) configured to initiate a rotational movement of the air about the axis of the cylinder (11) and a rotational movement about an axis perpendicular to the axis of said cylinder (11).

10. Use of a combustion engine according to either of Claims 8 and 9 for a Miller cycle.
